Europäisches Patentamt

European Patent Office

Office européen des brevets

(19)

(11) EP 0 688 590 B1

(12) **FASCICULE DE BREVET EUROPEEN**

(45) Date de publication et mention
de la délivrance du brevet:
**13.09.2000 Bulletin 2000/37**

(51) Int Cl.⁷: **B01D 15/02**

(21) Numéro de dépôt: **95401409.8**

(22) Date de dépôt: **15.06.1995**

(54) **Procédé de séparation par chromatographie en lit mobile simulé avec correction de volume mort par diminution de longueur**

Trennungsprozess mittels simulierter Wanderbettchromatographie mit Korrektion für das Totvolumen durch Längenabnahme

Separation process by simulated moving bed chromatography with correction for dead volume by length shrink

(84) Etats contractants désignés:
**BE CH DE ES GB IT LI NL**

(30) Priorité: **22.06.1994 FR 9407764**

(43) Date de publication de la demande:
**27.12.1995 Bulletin 1995/52**

(73) Titulaires:
• **INSTITUT FRANCAIS DU PETROLE**
**92502 Rueil-Malmaison (FR)**
• **SEPAREX**
**F-54250 Champigneulles (FR)**

(72) Inventeurs:
• **Hotier, Gérard**
**F-92500 Rueil Malmaison (FR)**

• **Couenne, Nicolas**
**F-69009 Lyon (FR)**
• **Cohen, Choua**
**F-69009 Lyon (FR)**
• **Nicoud, Roger-Marc**
**F-54630 Richardmesnil (FR)**

(74) Mandataire: Andreeff, **François**
**INSTITUT FRANCAIS DU PETROLE**
**4, avenue de Bois-Préau**
**92502 Rueil-Malmaison (FR)**

(56) Documents cités:
**EP-A- 0 415 821**       **WO-A-84/02854**
**WO-A-90/06796**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à un procédé de fractionnement de mélanges fluides de composants, effectué par une méthode de chromatographie.

Elle s'applique notamment à la séparation des hydrocarbures aromatiques à huit atomes de carbone. La chromatographie est basée sur le fait suivant : certains solides poreux, en présence de mélanges liquides, gazeux ou supercritiques ont la propriété de retenir plus ou moins fortement les différents constituants du mélange.

Les procédés de séparation basés sur la chromatographie sont le plus souvent mis en oeuvre de la manière suivante : le solide poreux, de granulométrie déterminée est contenu dans un récipient généralement cylindrique, la colonne ; il constitue la phase stationnaire. Le mélange à séparer est percolé sur la colonne, les différents constituants sortent successivement selon qu'ils sont retenus plus ou moins fortement par la phase stationnaire.

L'art antérieur est illustré par le brevet EP-A-0415821 qui décrit un procédé de séparation chromatographique d'un mélange d'au moins trois constituants en trois effluents au moyen de deux solvants. Le brevet WO-A-8402854 décrit une méthode d'utilisation périodique d'un flux renversé pour éviter le compactage de lits d'adsorbant. Enfin, le brevet WO-A-9006796 décrit une méthode pour augmenter la densité des lits d'adsorbant.

Le procédé de séparation concerné par cette invention est le procédé par chromatographie en lit mobile simulé, à contre-courant ou à co-courant, tel que décrit notamment dans les brevets US-A-2985589, US-A-4402832 et US-A-4498991.

Aucun de ces brevets n'enseigne le problème posé par le volume mort de la pompe ou du compresseur de recyclage dans la boucle de recyclage.

L'invention est illustrée par les figures suivantes, parmi lesquelles :

- la figure 1 montre le principe d'une séparation en contre-courant réel,
- les figures 2A, 2B, 2C montrent le fonctionnement d'un contre-courant simulé,
- la figure 3 montre un lit mobile simulé où la pompe de recyclage est solidaire du $n^{ème}$ lit ou tronçon de colonne,
- la figure 4 montre les variations de composition C (% poids) d'échantillons d'extrait prélevés au même instant de chacune des périodes T du cycle en fonction du numéro de période dans le cycle (modulo 24)
- la figure 5 montre les variations de la composition moyenne C (% poids) de l'extrait pour chacune des périodes du cycle en fonction du numéro de période NP dans le cycle, sans compensation de volume mort, et.
- la figure 6 montre les variations de la composition moyenne C (% poids) de l'extrait pour chacune des périodes du cycle en fonction du numéro de période NP dans le cycle, lorsque la compensation selon l'invention est appliquée.

Une manière d'expliquer le fonctionnement d'un procédé de séparation par chromatographie en lit mobile simulé consiste à le représenter par un contre-courant réel équivalent.

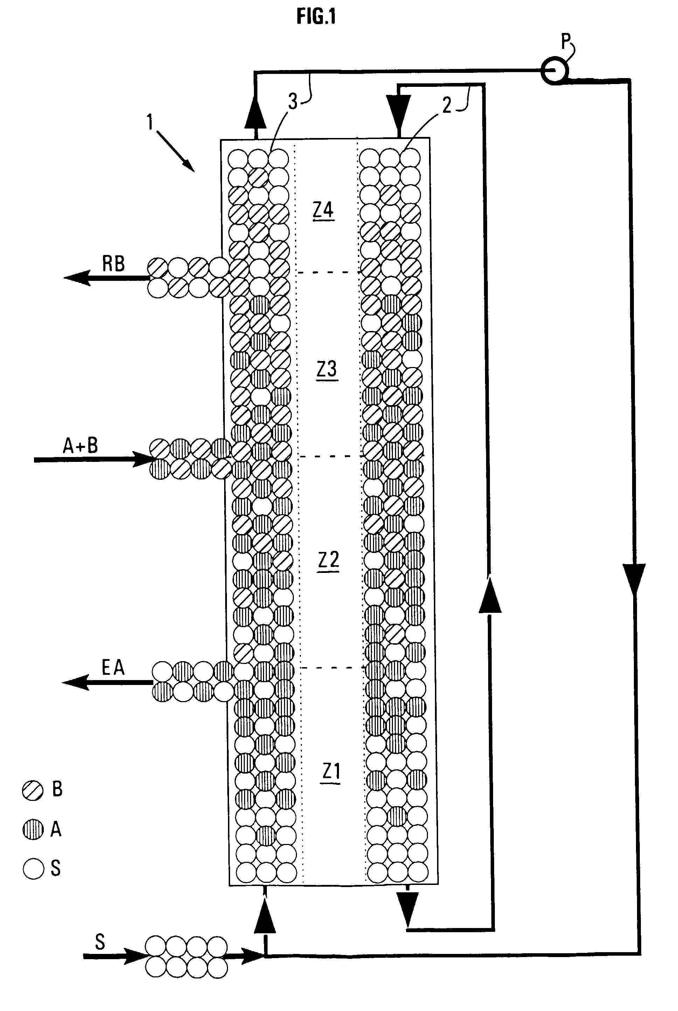

Dans le contre-courant réel, représenté par la figure 1 avec quatre zones Z1, Z2, Z3 et Z4, un profil des concentrations fixe et constant se développe dans une colonne 1 de séparation, où la position des points d'injection d'une charge A + B , d'un éluant S, et de soutirage d'un extrait EA et d'un raffinat RB reste fixe, tandis que le solide adsorbant 3 et le liquide 2 se déplacent à contre-courant. Dans ce procédé, une pompe P de recyclage permet de renvoyer le liquide du point haut au point bas de la colonne, tandis qu'un système tel qu'un lit entraîné, par exemple, permet de renvoyer le solide du point bas au point haut. Ces deux systèmes occupent vis-à-vis du profil de concentration le point où la seule espèce présente tant dans le liquide que dans le solide est l'éluant d'élution. Ce point se rencontre à la jonction des zones I et IV (voir figure 1). Dans cette situation, les volumes de liquide et de solide engagés dans les systèmes de recyclage sont strictement indifférents puisque, seule une espèce étant présente, les effets de rétromélange (backmixing) sont sans conséquence.

Le succès des procédés de séparation par chromatographie en lit mobile simulé tient à la difficulté de faire correctement circuler un solide sans créer d'attrition et sans augmenter considérablement la porosité de lit par rapport à un lit fixe. Dans les procédés en lit mobile simulé, le solide est disposé dans un certain nombre n de lits fixes, dans la pratique n est en général compris entre quatre et vingt-quatre. La différence majeure entre les procédés en contre-courant réel et ceux en lit mobile simulé tient au fait que dans ces derniers, le profil des concentrations n'est plus fixe mais qu'il se déplace à vitesse uniforme tout autour d'une boucle fermée constituée des n lits fixes ou colonnes chromatographiques disposés en série et telle que la sortie du $n^{ème}$ lit fixe soit reliée à l'entrée du premier.

On doit alors considérer deux cas de procédés en lit mobile simulé suivant la manière dont est reliée la pompe de recyclage (pour les liquides et les fluides supercitiques assez denses pour être pompés) ou le compresseur de recyclage (pour les gaz et les fluides supercritiques non pompables) qui permet d'assurer la circulation liquide dans la boucle des n lits fixes :

A) Dans un premier cas, chaque lit fixe est contenu dans une colonne individuelle et la pompe de recyclage peut se déplacer d'une jonction de colonne à la suivante à la même cadence que celle des points d'injection et de soutirage des fluides entrants et sortants. Dans ce cas (décrit dans les brevets US-A-5093004 et WO-A-93 22022 ), le volume de la ligne amenant le fluide de la sortie d'une colonne à l'entrée de la pompe de recyclage, le volume de la pompe elle-même et le volume de la ligne amenant le fluide du refoulement de la pompe à l'entrée de la colonne suivante (le total de ces trois termes constituant le volume de la boucle de recyclage) sont, comme dans le cas du contre-courant réel, sans conséquence puisque l'on s'arrange pour que ces volumes ne soient occupés que par de l'éluant pur.

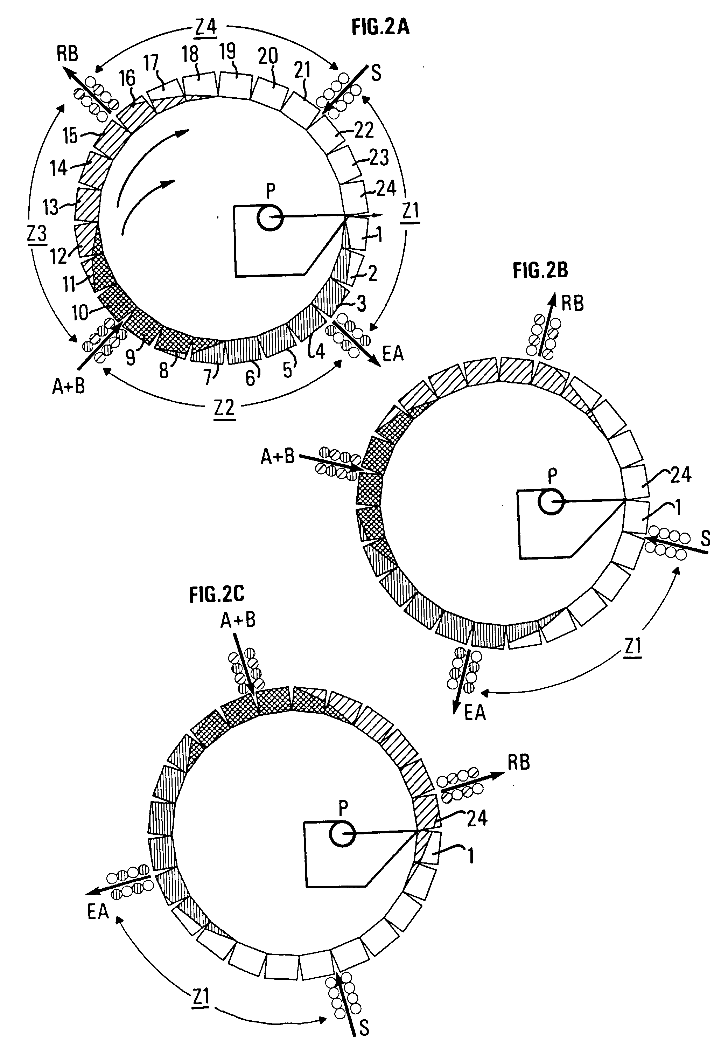

B) Dans un second cas, chaque lit fixe ou tronçon de colonne chromatographique est relié au suivant par une ligne ne pouvant aller que vers ce lit suivant (en particulier quand plusieurs lits fixes sont situés dans la même colonne) sauf le $n^{ème}$ dont la sortie est reliée à l'aspiration de la pompe P de recyclage, ladite pompe ayant son refoulement connecté au premier des lits fixes (voir Figures 2). Naturellement la numérotation de ces tronçons de colonne est purement arbitraire par convention on considére que le premier a son entrée reliée au refoulement de la pompe de recyclage et que le dernier ou $n^{ème}$ a sa sortie reliée à l'aspiration de ladite pompe. Dans ce cas, la pompe de recyclage verra passer l'ensemble du profil des concentrations. Le volume mort de cette pompe crée une anisotropie du volume du $n^{ème}$ lit fixe par rapport aux autres et il en résulte une perturbation des compositions de l'extrait et du raffinat. ce qui entraîne une baisse de pureté et de rendement . De manière générale pour minimiser l'ensemble des volumes morts de la boucle, on s'arrange pour que les lignes de jonction entre les différentes colonnes soient toutes de même volume, ce volume étant de plus réduit au minimum indispensable. Lorsque le fluide dans le système est un gaz recyclé par un compresseur, la perturbation observée est beaucoup plus faible que celle obtenue dans le cas d'un liquide ou d'un fluide supercritique pompable . Pour les gaz à faible pression, ladite perturbation est tout à fait négligeable .

De manière simplifiée, l'unité peut être représentée comme un ensemble de segments qui, de manière souhaitable seraient tous de même longueur L (ces segments symbolisent les tronçons de colonne). Cependant, à l'un de ces segments on est obligé de rajouter une longueur $\ell$ (c'est ce $\ell$ qui symbolise le volume mort de la boucle de recyclage). Lorsque l'unité est en fonctionnement, un point se déplace le long de ces segments avec une vitesse constante u. Le point dispose d'un temps $\theta$ pour parcourir l'ensemble des n segments et le fonctionnement est optimum lorsque les jonctions des segments sont franchies de manière synchronisée sur des temps multiples de $\theta/n$. Dans le cas idéal (n segments de longueur L) on aurait $T = \theta/n = L/u$ dans le cas d'une unité réelle on se fixe T et $\theta$ en négligeant $\ell$. La

longueur totale à parcourir est non plus n.L mais $n.L + \ell$ ; pendant chacune des périodes T, le point parcourt $L + \ell/n$ alors qu'il devrait parcourir L pendant les n-1 premières périodes et $L + \ell$ pendant la dernière. Le passage du point aux jonctions des segments n'est plus synchronisé à chaque temps multiple de T mais uniquement aux temps multiples de $\theta$. Pour arriver à cette schématisation, il suffit de diviser le volume V de chacun des tronçons, le volume mort de la boucle de recyclage v et le débit Di dans les tronçons par la section desdits tronçons pour obtenir respectivement L, $\ell$ et u.

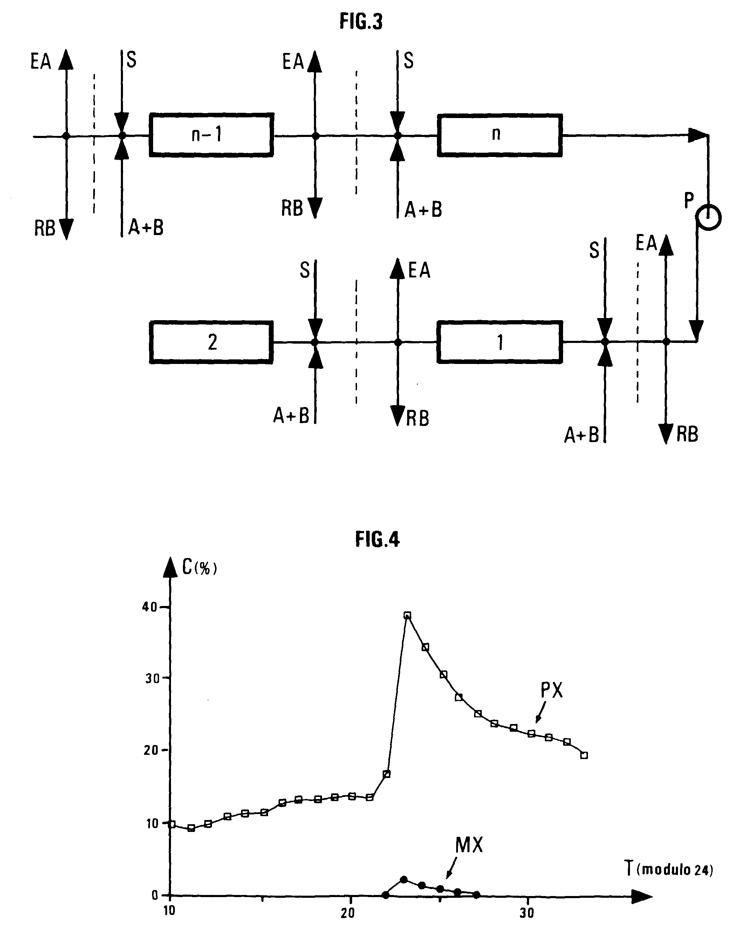

En figure 4, on présente un exemple de la perturbation causée par le volume de la boucle de recyclage sur la composition instantanée de l'extrait prise au même moment de chaque période , période par période, dans un lit mobile simulé à 4 zones et 24 tronçons. Si l'on observe sur plusieurs cycles successifs, on voit que la perturbation admet une périodicité de 24 périodes soit 1 cycle (Proceedings of the 9 th international symposium on preparative chromatography, Nancy april 1992, Balannec-Hotier).

Par ailleurs, la demande de brevet français FR-A-2 719 233 (WO-A-94/05293) décrit un procédé de séparation en lit mobile simulé à débit de recyclage constant bien que la pompe de recyclage ait son aspiration reliée au $n^{ème}$ lit fixe et son refoulement au premier lit fixe Donc elle voit passer l'ensemble des profils de concentration. Dans ce cas, les circuits d'injection et de soutirage dans le système chromatographique sont permutés indépendamment les uns des autres et l'on ne connaît plus une période de permutation unique T mais un tableau

$$\left[ T^i_j \right]$$

des temps de permutation calculé en se basant sur le fait que le volume élué à la sortie de chaque zone doit être constant et équivalent à celui du lit mobile simulé conventionnel équivalent tel que

$$V_k = D_k . T = D^p_k . \left( T^j_{i+1} - T^{j-1}_i \right)$$

où

- Dk représente le débit en zone k dans le lit mobile simulé conventionnel
- T représente la période de permutation du lit mobile simulé conventionnel
- $D^p_k$ représente le débit en zone k dans le lit mobile simulé à débit à recyclage constant lorsque la pompe se trouve en zone p.
- $T^j_{i+1}$ représente l'instant où le flux prélevé ou introduit permute de la sortie du $j^{eme}$ tronçon à la sortie du tronçon suivant, où :

- j est le numéro du tronçon précédant immédiatement le point d'injection ou de soutirage,
- i est le nombre de fois dont le plus lent des circuits a déjà permuté depuis le début du cycle.

Dans la pratique, ce type de système se comporte exactement comme un lit mobile simulé conventionnel et il présente les mêmes perturbations des compositions de l'extrait et du raffinat dues au volume mort de la boucle de recyclage qui introduit une anisotropie du volume du $n^{ème}$ lit ou tronçon de colonne par rapport à celui des autres tronçons de colonne.

Un premier objet de l'invention, lorsque le mélange est un liquide ou un fluide supercritique pompable est de remédier à la fois à la perturbation de la composition de l'extrait et à celle du raffinat causée par le volume mort de la pompe de recyclage situé entre le $n^{ème}$ et le premier lit .

Un second objet de l'invention, lorsque le mélange est un gaz sous pression ou un fluide supercritique peu dense est de remédier à la fois à la perturbation de la composition de l'extrait et à celle du raffinat causée par le volume mort du compresseur de recyclage situé entre le $n^{ème}$ et le premier lit Plus généralement, l'objet de l'invention est de remédier à la fois aux perturbations de la composition de l'extrait et à celles du raffinat causées par les volumes morts de divers appareils situés entre deux lits consécutifs de la boucle.

De façon plus précise l'invention concerne un procédé de séparation en lit mobile simulé comportant les étapes et les moyens tels que définis dans la revendication 1, avec tout mode préféré tel que défini dans les revendications dépendantes.

L'invention concerne aussi un procédé de séparation en lit mobile simulé comportant les étapes et les moyens tels que définis dans la revendication 2, avec tout mode préféré tel que défini dans les revendications dépendantes.

Pour des raisons de commodité, on considère par exemple, que la pompe de recyclage régulée en débit se situe arbitrairement entre les colonnes n et 1, le problème consiste donc, si l'on adopte la schématisation décrite plus haut, à rétablir une situation telle que le point arrive à la fin de chaque segment, à la fin de chacune des périodes du cycle de durée totale θ. Le moyen que l'on propose consiste à raccourcir d'une longueur "$\ell$" le $n^{ème}$ segment à qui on est obligé de rajouter $\ell$ , de manière à compenser le retard introduit par cette longueur . Soit εb la somme des porosités intergrain (ou de lit) et de grain, on exprime εb sous forme de fraction volumique d'un tronçon de colonne. Un constituant non adsorbé se déplace dans les (n-1) premiers tronçons dans des volumes successifs εb.V ; le $n^{ème}$ tronçon devra donc avoir un volume V' tel que εb.V = εb.V' + v pour maintenir le même temps de parcours θ, soit V' = V - v / εb . Soit Ca la capacité d'adsorption de la phase fixe exprimée sous forme de fraction volumique d'un tronçon de colonne, un constituant moyennement adsorbé se déplace dans les (n-1) premiers tronçons dans des volumes successifs (εb+Ca).V ; le $n^{ème}$ tronçon devra donc avoir un volume V' tel que (εb+Ca).V (εb+Ca).V' + v pour maintenir le même temps de parcours θ, soit V' = V - v / (εb +Ca). Enfin un constituant fortement adsorbé, déplacé par un éluant moins adsorbé que lui, se déplace dans les (n-1) premiers tronçons dans des volumes successifs (εb+k.Ca).V , où k > 1 ; de manière pratique, on considére qu'il rencontre au maximum dans les (n-1) premiers tronçons des volumes successifs V et donc que le $n^{ème}$ tronçon a un volume V'= V-v pour que, dans le cas du constituant fortement adsorbé, le temps de parcours θ soit maintenu.

De manière générale, selon une première variante, le $n^{ème}$ tronçon a un volume V', tel que V - v > V' > V - v / εb. De cette manière, la grande majorité des perturbations sera éliminée; cependant, des perturbations résiduelles subsisteront puisque la conjonction d'un lit fixe réduit et d'un volume mort, même à écoulement piston, n'est pas équivalente à un lit fixe de taille normale .

Selon une deuxième variante, le mélange fluide peut être un gaz sous pression ou un fluide supercritique peu dense. Dans ce cas, il est véhiculé par un (ou des) compresseur(s) de recyclage, il faut alors atténuer le terme correctif en le multipliant par le rapport des densités de la phase fluide df à la phase adsorbée da.

Plus généralement, si l'on utilise, comme c'est souvent le cas, une pompe de recyclage sous contrôle de débit et une ou plusieurs pompes de recyclage sous contrôle de pression, le problème des deux ou plusieurs anisotropies peut se trouver résolu de la même manière, en réduisant le volume du lit fixe placé à l'aspiration (ou au refoulement selon le cas) de la pompe de recyclage suivant la règle énoncée plus haut.

Bien que la principale cause de l'injection de volumes morts dans un appareil de chromatographie en lit mobile simulé soit la ou les pompe(s) ou compresseur (s) de recyclage, l'introduction d'autres appareils entre deux colonnes particulières produiront les mêmes effets on peut citer un certain nombre d'appareils de mesure ou d'échantillonnage tels que débitmètre, cuve de spectromètre pour mesure en ligne de composition, by-pass ou boucle d'échantillonnage. Chaque anisotropie particulière de volume, donc chaque volume mort $v_j$ induit par l'introduction d'un appareillage particulier peut être compensée en réduisant le volume du lit fixe solidaire d'un tel appareil selon la relation V' = V - $v_j$ /ε, où V' est le volume corrigé d'un tronçon solidaire d'un volume mort, V est le volume d'un tronçon (et de sa liaison vers le tronçon suivant) ne comportant pas de volume mort additionnel dans la boucle, $v_j$ représente le volume mort d'une pompe ou d'un appareil de mesure, et ε un coefficient compris entre 1 et εb qui représente le total des porosités intergrain (de lit) et de grain, exprimé en fraction volumique d'une colonne ou d'un tronçon de colonne. Lorsque le mélange fluide est un gaz sous pression ou un fluide supercritique peu dense, il est véhiculé par un (ou des) compresseur(s), et il faut atténuer le terme correctif en le multipliant par le rapport des densités de la phase fluide df à la phase adsorbée da.

Les figures 2A, 2B et 2C représentent un schéma de fonctionnement d'un dispositif à contre courant simulé où le liquide et le déplacement des commutations s'effectuent dans le même sens (sens des aiguilles d'une montre). Le dispositif comprend 24 colonnes chromatographiques contenant l'adsorbant, connectées les unes aux autres, la colonne 24 (n) et la colonne 1 étant reliées par l'intermédiaire d'une pompe fixe de recyclage P. La zone 1 est délimitée entre une injection d'éluant S et un soutirage d'extrait EA, la zone 2 entre le soutirage d'extrait et l'injection de charge A+B, la zone 3 entre l'injection de charge A+B et un soutirage de raffinat RB et la zone 4 entre le soutirage de raffinat et l'injection d'éluant. A la fin de chaque période les courants d'injection et de soutirage sont permutés.

La figure 3 montre une variante avec la succession des tronçons de colonne n, de soutirage d'extrait EA, de raffinat RB, et d'injection de la charge A+B et d'éluant S entre deux tronçons. De plus cette figure montre un agencement particulier où la pompe de recyclage et/ou le moyen de mesure sont situés immédiatement en amont du soutirage du courant d'extrait EA ou de raffinat RB, ces derniers se situant en amont du lit 1. Dans ce cas, c'est le volume du nème tronçon qu'il faut corriger pour rétablir l'isochronicité du déplacement du point précédemment cité par rapport aux injections et soutirages.

Deux autres situations sont également possibles :

Selon une variante non illustrée, les courants de soutirage du nème lit et ceux d'injection dans le premier lit peuvent se trouver entre le nème lit et la pompe de recyclage dans ce cas, il faut corriger le volume du premier lit et non celui du nème et dernier.

Selon une autre variante non illustrée, les courants de soutirage du nème lit peuvent se trouver entre le nème lit et la pompe de recyclage, tandis que les points d'injection dans le premier lit peuvent se trouver entre la pompe de recyclage et le premier lit cette situation est à proscrire ; en effet dans ce cas pour garder l'isochronicité par rapport aux soutirages, il faudrait raccourcir le premier lit, alors que pour garder l'isochronicité par rapport aux injections, il faudrait raccourcir le nème lit.

Enfin, si l'on doit placer les courants de soutirage du nème lit et les courants d'injection dans le premier lit entre deux volumes morts ou deux anisotropies distinctes, par exemple la pompe ou compresseur de recyclage et un appareil de mesure ou entre la pompe de recyclage et une ligne plus longue que les autres, on arrive à la situation où l'on devra raccourcir le nème lit en fonction du volume mort de la pompe ou compresseur de recyclage et le premier lit en fonction du volume mort de l'appareil de mesure ou du volume mort résultant d'une ligne plus longue que les autres.

Dans le cas d'un lit mobile simulé à débit de recyclage constant tel que décrit dans la demande de brevet français FR-A-2 719 233 (WO-A-94/05293), puisque la perturbation produite par l'introduction de volumes morts dans la boucle est équivalente à celle observée pour le lit mobile simulé conventionnel équivalent, la correction apportée par une réduction du volume du lit précédant l'anisotropie sera également équivalente. Les règles de correction exposées ci-dessus seront donc appliquées exactement de la même manière pour un lit mobile simulé à débit de recyclage constant que pour le lit mobile simulé conventionnel équivalent.

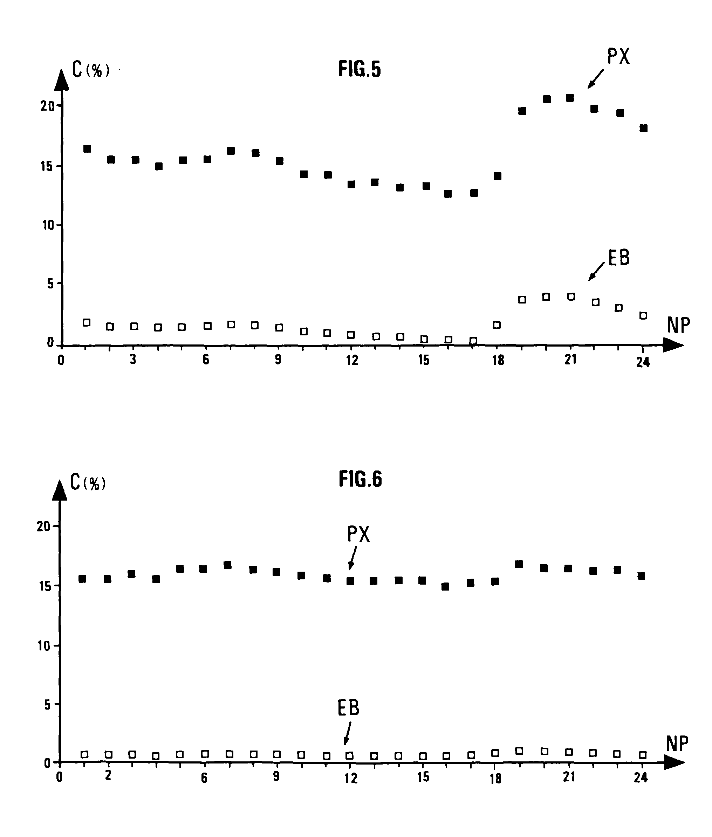

L'exemple qui suit illustre l'invention sans toutefois en limiter l'application ; la figure 5 présente la composition de l'extrait période par période sans aucune compensation du volume mort, alors que la figure 6 présente le même diagramme lorsque la compensation est effectuée en réduisant la longueur du nème segment de la colonne.

Exemple 1A(comparatif)

Selon l'art antérieur, on sépare une charge ayant pour composition: ethylbenzène (EB) 12,07 %, paraxylène (PX) 22,95 %, ortho plus métaxylène (OX + MX) 64,98 %, sur une unité constituée de 24 colonnes de 1 m de longueur et 1 cm de diamètre, opérée en lit mobile simulé à contre-courant. Les lignes et la pompe intercalées entre les colonnes 24 et 1 créent un volume mort de 17,25 $cm^3$. Les débits respectifs de la charge, de l'éluant constitué de toluène sensiblement pur, de l'extrait et du raffinat sont de 1,42 $cm^3$/min, 2,45 $cm^3$/min, 2,05 $cm^3$/min et 1,82 $cm^3$/min. L'adsorbant est une zéolithe Y échangée baryum et potassium telle que celle correspondant à la référence SPX 2000 de la société CECA (France) Les colonnes se répartissent comme suit : 5 en zone 4, 4 en zone 3, 7 en zone 2, 8 en zone 1. Les débits de la pompe de recyclage sont 5 fois en zone 4, 9,1 $cm^3$/min, 4 fois en zone 3, 10,92 $cm^3$/min, 7 fois en zone 2, 9,5 $cm^3$/min, 8 fois en zone 1, 11,55 $cm^3$/min et la période de permutation est de cinq minutes. Pendant la première période du cycle, l'éluant est injecté à l'entrée de la colonne n°1, l'extrait est prélevé à la sortie de la colonne n°8, la charge est injectée à l'entrée de la colonne n°16 et le raffinat est prélevé à la sortie de la colonne n°19. La pureté moyenne obtenue pour le paraxylène dans l'extrait est de 90,70 % et le rendement de 99,90 %. On voit surtout, figure 5, que les compositions d'extrait mesurées période par période sont très variables.

Exemple 1B

Selon l'invention, tous les paramètres restant par ailleurs égaux, la vingt-quatrième colonne est remplacée par une colonne de 62,5 cm de longueur. Le rendement obtenu est 99,75 % pour le paraxylène dans l'extrait tandis que la pureté obtenue est cette fois de 96,26 %. On voit surtout (figure 6) que les compositions d'extrait pris période par période restent très proches les unes des autres : la différence maximale est divisée par 5. On constate donc qu'une correction très simple: le raccourcissement du 24ème lit fait disparaître plus de 80% des perturbations de composition causées par le volume mort de la pompe de recyclage . Le volume V' soit 62,5 cm. 0,5cm.0,5cm.$\pi$ = 49,09 cm$^3$ est bien compris entre V - v / $\varepsilon$b soit 48,76 cm$^3$ et V - v soit 61,25 cm$^3$ , avec.$\varepsilon$b= 0,58, soit 0,33 pour la porosité de lit et 0,25 pour la porosité de grain.

Exemple 1C

Outre la pompe de recyclage entre le premier et le 24ème lit, on intercale entre les 12ème et 13ème lits un spectrophotomètre dont le volume mort v' représente 8 cm$^3$, ces 8 cm$^3$ seront comme la pompe de la figure 3 considérés comme solidaires de la colonne 12 . Pour compenser les perturbations de composition de l'extrait et du raffinat causées par ces volumes morts, on remplace la 24ème colonne par une colonne de 62,5 cm de long, comme explicité plus haut dans l'exemple 1B, et la 12ème par une colonne de 82,5 cm de long.

**Revendications**

1. Procédé de séparation en lit mobile simulé, à partir d'une charge (A+B) d'au moins deux constituants, en présence d'au moins un éluant (S), en au moins deux fractions, comportant n colonnes ou tronçons de colonnes chromatographiques montées en série et en boucle fermée, dans lesquelles circule un mélange liquide ou supercritique, la boucle présentant au moins un courant d'injection de la charge, au moins un courant d'injection de l'éluant, au moins un courant de soutirage d'un extrait (EA) et au moins un courant de soutirage d'un raffinat (RB), quatre zones au moins étant déterminées dans lesdites colonnes, chaque zone étant séparée de la suivante par un courant d'injection ou de soutirage, les courants d'injection et de soutirage étant permutés périodiquement , la boucle fermée comportant une pompe de recyclage (P) dudit mélange, régulé en débit, et situé entre deux colonnes ou tronçons de colonne successifs, éventuellement au moins un moyen de mesure ou d'échantillonnage et éventuellement au moins une pompe de recyclage régulé en pression, ledit moyen de mesure ou d'échantillonnage et/ou la pompe de recyclage régulé en pression étant chacun situé entre deux colonnes ou tronçons de colonne consécutifs, lesdites pompes, et lesdits moyens de mesure ou d'échantillonnage éventuellement présents, présentant chacun un volume mort dans la boucle de recyclage qui entraîne des perturbations dans la composition de l'extrait et dans celle du raffinat, le procédé étant caractérisé en ce que l'on diminue le volume du tronçon immédiatement en amont dudit volume mort lorsque le volume mort est situé en aval dudit tronçon et en amont des courants de soutirage dudit tronçon, ou l'on diminue le volume du tronçon immédiatement en aval dudit volume mort lorsque le volume mort est situé en aval des courants d'injection dans ledit tronçon et en amont dudit tronçon, selon la relation V'j = V-vj / $\varepsilon$ où V représente le volume vide individuel d'un tronçon et de sa connexion vers le tronçon suivant, V' représente le volume vide individuel d'un tronçon de volume réduit selon l'invention et de sa connexion vers le tronçon suivant, vj le ou les volume(s) mort(s) dont on cherche à corriger les effets, $\varepsilon$ un coefficient compris entre $\varepsilon$b et 1, où $\varepsilon$b est exprimé en fraction volumique d'une colonne ou d'un tronçon de colonne et représente le total des porosités intergrain et de grain dans ladite colonne ou tronçon de colonne.

2. Procédé de séparation en lit mobile simulé, à partir d'une charge (A+B) d'au moins deux constituants, en présence d'au moins un éluant (S), en au moins deux fractions, comportant n colonnes ou tronçons de colonnes chromatographiques montées en série et en boucle fermée, dans lesquelles circule un mélange gazeux sous pression ou un fluide supercritique peu dense, la boucle présentant au moins un courant d'injection de la charge, au moins un courant d'injection de l'éluant, au moins un courant de soutirage d'un extrait (EA) et au moins un courant de soutirage d'un raffinat (RB), quatre zones au moins étant déterminées dans lesdites colonnes, chaque zone étant séparée de la suivante par un courant d'injection ou de soutirage, les courants d'injection et de soutirage étant permutés périodiquement , la boucle fermée comportant un compresseur de recyclage (P) dudit mélange, régulé en débit, et situé entre deux colonnes ou tronçons de colonne successifs, éventuellement au moins un moyen de mesure ou d'échantillonnage et éventuellement au moins un compresseur de recyclage régulé en pression, ledit moyen de mesure ou d'échantillonnage et/ou un compresseur de recyclage régulé en pression étant chacun situé entre deux colonnes ou tronçons de colonne consécutifs, lesdits compresseurs, et lesdits moyens de mesure ou d'échantillonnage éventuellement présents, présentant chacun un volume mort dans la boucle de recyclage qui entraîne des perturbations dans la composition de l'extrait et dans celle du raffinat, le procédé étant caractérisé en ce que l'on diminue le volume du tronçon immédiatement en amont dudit volume mort lorsque le volume mort est situé en aval dudit tronçon et en amont des courants de soutirage dudit tronçon, ou l'on diminue le volume du tronçon immédiatement en aval dudit volume mort lorsque le volume mort est situé en aval des courants d'injection dans ledit tronçon et en amont dudit tronçon, selon la relation V'j = V - df.vj / da.ε où V'j, V, vj, ε sont les paramètres de la revendication 1 et où df est la densité de la phase fluide et da la densité de la phase adsorbée.

3. Procédé selon l'une des revendications 1 à 2 dans lequel la boucle comprend au moins deux volumes morts distincts entre deux tronçons successifs, les courants de soutirage et les courants d' injection se trouvant entre les volumes distincts, et dans lequel on diminue le volume de chacun des deux tronçons en fonction de la relation de l'une des revendications 1 à 2.

4. Procédé selon l'une des revendications 1 à 3 dans lequel le lit mobile simulé est à contre-courant.

5. Procédé selon l'une des revendications 1 à 3 dans lequel le lit mobile simulé est à co-courant.

6. Procédé selon l'une des revendications 1 à 5 dans lequel le lit mobile simulé est opéré à débit de recyclage constant.

7. Procédé selon l'une des revendications 1 à 6 dans lequel la charge comprend un mélange d'hydrocarbures aromatiques comportant 8 atomes de carbone.

**Patentansprüche**

1. Verfahren zum Trennen, im beweglichen simulierten Bett, ausgehend von einer Charge (A+B) wenigstens zweier Bestandteile, in Anwesenheit wenigstens eines Eluierungsmittels (S) in wenigstens zwei Fraktionen, n chromatographische Kolonnen oder Kolonnenabschnitte umfassend, die in Reihe und in geschlossener Schleife angeordnet sind, in welchen ein flüssiges oder überkritisches Gemisch zirkuliert, wobei die Schleife wenigstens einen Injektionsstrom für die Charge, wenigstens einen Injektionsstrom für das Eluierungsmittel, wenigstens einen Strom zum Abzug eines Extrakts (EA) und wenigstens einen Abzugstrom für ein Raffinat (RB) aufweist, wenigstens vier Zonen in diesen Kolonnen bestimmt werden und jede Zone von der folgenden durch einen Injektions- oder Abzugsstrom getrennt ist, die Injektions- und Abzugsströme periodisch getauscht werden, und die geschlossene Schleife eine Rezyklierungspumpe (P) dieses Gemisches aufweist, die mengengeregelt ist und zwischen zwei Kolonnen oder aufeinanderfolgenden Kolonnenabschnitten angeordnet ist, gegebenenfalls mit wenigstens einem Mess- oder Probennahmemittel und gegebenenfalls wenigstens einer druckgesteuerten Rezyklierungspumpe, wobei dieses Mess- oder Probennahmemittel und/oder die druckgesteuerte Rezyklierungspumpe sich je zwischen zwei aufeinanderfolgenden Kolonnen oder Kolonnenabschnitten befindet (befinden) und diese gegebenenfalls vorhandenen Mess- oder Probennahmemittel je ein Totvolumen in der Rezyklierungsschleife aufweisen, welches Störungen in der Zusammensetzung des Extrakts und dem des Raffinats mit sich bringt, dadurch gekennzeichnet, dass man das Volumen des Abschnitts unmittelbar vor dem Totvolumen vermindert, wenn sich das Totvolumen hinter diesem Abschnitt und vor den Abzugsströmen dieses Abschnitts befindet oder man das Volumen des hinter diesem Totvolumen unmittelbar folgenden Abschnitts vermindert, wenn sich das Totvolumen hinter den Injektionsströmen in diesem Abschnitt und vor diesem Abschnitt befindet, und zwar entsprechend der Beziehung V'j= V-vj / ε , wo V das hohle Einzelvolumen eines Abschnitts und seiner Verbindung zum folgenden Abschnitt darstellt und V' das individuelle Volumen eines reduzierten Volumenabschnitts nach der Erfindung und seiner Verbindung zum folgenden Abschnitt ist und vj das Totvolumen oder die Totvolumina ist oder sind, dessen oder deren Effekte korrigiert werden sollen und ε ein Koeffizient zwischen εb und 1 ist, wo εb, als Volumenanteil einer Kolonne oder eines Kolonnenabschnittes ausgedrückt wird und die Gesamtheit der Zwischenkorn- und der Kornporositäten in dieser Kolonne oder diesem Kolonnenabschnitt darstellt.

2. Verfahren zum Trennen, im beweglichen simulierten Bett, ausgehend von einer Charge (A+B) wenigstens zweier Bestandteile, in Anwesenheit wenigstens eines Eluierungsmittels (S) in wenigstens zwei Fraktionen, n chromatographische Kolonnen oder Kolonnenabschnitte umfassend, die in Reihe und in geschlossener Schleife angeordnet sind, in denen ein gasförmiges Gemisch unter Druck oder ein superkritisches wenig dichtes Fluid zirkuliert, wobei die Schleife wenigstens einen Injektionsstrom für die Charge, wenigstens einen Injektionsstrom für das Eluierungsmittel, wenigstens einen Abzugsstrom für ein Extrakt (EA) und wenigstens einen Abstrom für ein Raffinat (RB) aufweist, wenigstens vier Zonen in diesen Kolonnen bestimmt werden, jede Zone von der folgenden durch einen Injektions- oder Abzugsstrom getrennt wird, die Injektions- und Abzugsströme periodisch getauscht werden, die geschlossene Schleife einen mengengesteuerten Rezyklierungskompressor (P) für dieses Gemisch aufweist, der zwischen zwei aufeinanderfolgenden Kolonnen oder Kolonnenabschnitten angeordnet ist, gegebenenfalls wenigstens ein Mess- oder Probennahmemittel und gegebenenfalls wenigstens ein druckgesteuerter Rezyklierungskompressor, wobei das Mess- oder Probennahmemittel und/oder ein druckgeregelter Rezyklierungskompressor je zwischen zwei Kolonnen oder aufeinanderfolgenden Kolonnenabschnitten angeordnet ist, diese Kompressoren und diese gegebenenfalls vorhandenen Mess- oder Probennahmemittel je ein Totvolumen in der Rezyklierungsschleife aufweisen, welches Störungen in die Zusammensetzung des Extrakts und die des Raffinats mitnimmt, dadurch gekennzeichnet, dass man das Volumen des Abschnitts unmittelbar vor diesem Totvolumen vermindert, wenn das Totvolumen sich hinter diesem Abschnitt und vor den Abzugsströmen für diesen Abschnitt befindet oder man das Volumen des unmittelbar hinter diesem Totvolumen befindlichen Abschnitts vermindert, wenn das Totvolumen sich hinter den Injektionsströmen in diesem Abschnitt und vor diesem Abschnitt befindet, entsprechend der Beziehung V'j= V-df.vj/da. ε, wo V'j, V, vj, ε die Parameter des Anspruchs 1 sind und wo df die Dichte der fluiden Phase und da die Dichte der adsorbierten Phase ist.

3. Verfahren nach einem der Ansprüche 1 bis 2, bei dem die Schleife wenigstens zwei unterschiedliche Totvolumina zwischen zwei aufeinanderfolgenden Abschnitten umfasst, und die Abzugsströme und die Injektionsströme sich zwischen den unterschiedlichen Totvolumina befinden und bei dem man das Volumen jedes der beiden Abschnitte als Funktion der Beziehung eines der Ansprüche 1 bis 2 vermindert.

4. Verfahren nach einem der Ansprüche 1 bis 3, bei dem das simulierte bewegliche Bett vom Gegenstromtyp ist.

5. Verfahren nach einem der Ansprüche 1 bis 3, bei dem das bewegliche simulierte Bett vom Vergleichsstromtyp ist.

6. Verfahren nach einem der Ansprüche 1 bis 5, bei dem das simulierte bewegliche Bett mit konstanter Rezyklierungsmenge betrieben wird.

7. Verfahren nach einem der Ansprüche 1 bis 6, bei dem die Charge ein Gemisch aus aromatischen Kohlenwasserstoffen mit 8 Kohlenstoffatomen umfasst.

**Claims**

1. A process for the simulated moving bed separation of a feed (A+B) containing at least two constituents in the presence of at least one eluent (S) into at least two fractions, comprising n chromatographic columns or column sections mounted in series and in a closed circuit, in which a liquid or supercritical mixture circulates, the circuit having at least one feed injection stream, at least one eluent injection stream, at least one extract extraction stream (EA) and at least one raffinate extraction stream (RB), at least four zones being determined in said columns, each zone being separated from the following zone by an injection or extraction stream, the injection and extraction streams being periodically shifted, the closed circuit comprising a recycling pump (P) for said mixture, which is flow rate regulated and located between two successive columns or column sections, optionally at least one measuring or sampling means and optionally at least one recycling pump which is pressure regulated, said measuring or sampling means and/or the pressure regulated recycling pump each being located between two consecutive columns or column sections, said pumps and said measuring or sampling means optionally present each having a dead volume in the recycling circuit which causes perturbations in the extract and in the raffinate composition, the process being characterised in that the volume of the section immediately upstream of said dead volumes is reduced when dead volume is located downstream of said section and upstream of the extraction streams of said section, or the volume of the section immediately downstream of said dead volume is reduced when said dead volume is located downstream of the injection streams into said section and upstream of said section, in accordance with the relationships:

$$V'_j = V - v_j / \varepsilon$$

where V represents the individual void volume of a section and its connection to the following section, V' represents the individual void volume of a section with reduced volume in accordance with the invention and its connection to the following section, $v_j$ represents the dead volume(s) whose effects are to be corrected, ε represents a coefficient between εb and 1, where εb is expressed as the volume fraction of a column or column section and represents the total of the intergrain and grain porosities in said column or column section.

2. A process for the simulated moving bed separation of a feed (A+B) containing at least two constituents in the presence of at least one eluent (S) into at least two fractions, comprising n chromatographic columns or column sections mounted in series and in a closed circuit, in which a pressurized gaseous mixture or a less dense supercritical fluid circulates, the circuit having at least one feed injection stream, at least one eluent injection stream, at least one extract extraction stream (EA) and at least one raffinate extraction stream (RB), at least four zones being determined in said columns, each zone being separated from the following zone by an injection or extraction stream, the injection and extraction streams being periodically shifted, the closed circuit comprising a recycling compressor for said mixture, which is flow rate regulated and located between two successive columns or column sections, optionally at least one measuring or sampling means and optionally at least one recycling compressor which is pressure regulated, said measuring or sampling means and/or the pressure regulated recycling compressor each being located between two consecutive columns or column sections, said compressors and said measuring or sampling means optionally present each having a dead volume in the recycling circuit which causes perturbations in the extract and in the raffinate composition, the process being characterised in that the volume of the section immediately upstream of said dead volumes is reduced when dead volume is located downstream of said section and upstream of the extraction streams of said section, or the volume of the section immediately downstream of said dead volume is reduced when said dead volume is located downstream of the injection streams into said section and upstream of said section, in accordance with the relationships:

$$V'_j = V - df.v_j/da. \, \varepsilon$$

where $V'_j$, $V$, $v_j$ and $\varepsilon$ are the parameters of claim 1 and where df is the density of the fluid phase and da is the density of the adsorbed phase.

**3.** A process according to any one of claims 1 to 2, in which the circuit comprises at least two distinct dead volumes between two successive sections, the extraction streams and injection streams being between the distinct volumes, and in which the volume of each of the two sections is reduced as a function of the relationships defined in claim 1 or claim 2.

**4.** A process according to any one of claims 1 to 3 in which the simulated moving bed is in counter-current mode.

**5.** A process according to any one of claims 1 to 3 in which the simulated moving bed is in co-current mode.

**6.** Process according to any one of claims 1 to 5 in which the simulated moving bed is operate with a constant recycle flow rate.

**7.** A process according to any one of claims 1 to 6, in which the feed comprises a mixture of aromatic hydrocarbons containing 8 carbon atoms.

**FIG.1**

FIG.2A

FIG.2B

FIG.2C

FIG.3

FIG.4

FIG.5

FIG.6